Europäisches Patentamt

European Patent Office

Office européen des brevets

(19)

(11) Veröffentlichungsnummer: **0 226 796**
**B1**

(12) # EUROPÄISCHE PATENTSCHRIFT

(45) Veröffentlichungstag der Patentschrift: **30.01.91**

(51) Int. Cl.⁵: **H 04 N 5/782**

(21) Anmeldenummer: **86115656.0**

(22) Anmeldetag: **11.11.86**

(54) **Videorecorder für Fernsehen erhöhter Auflösung.**

(30) Priorität: **23.12.85 DE 3545921**

(43) Veröffentlichungstag der Anmeldung:
**01.07.87 Patentblatt 87/27**

(45) Bekanntmachung des Hinweises auf die
Patenterteilung:
**30.01.91 Patentblatt 91/05**

(84) Benannte Vertragsstaaten:
**DE FR GB**

(56) Entgegenhaltungen:
EP-A-0 171 759
DE-A-3 109 006
DE-A-3 510 766
US-A-4 214 259

(73) Patentinhaber: **GRUNDIG E.M.V. Elektro-
Mechanische Versuchsanstalt Max Grundig
holländ. Stiftung & Co. KG.
Kurgartenstrasse 37
D-8510 Fürth/Bay. (DE)**

(72) Erfinder: **Opelt, Christian
Tannenstrasse 12
D-8501 Veitsbronn (DE)**

Courier Press, Leamington Spa, England.

**Beschreibung**

Die vorliegende Erfindung betrifft einen Videorecorder zur Aufzeichnung und Wiedergabe von Signalen, deren Bandbreite größer ist als die begrenzte Bandbreite herkömmlicher genormter Farbvideosignale, mit den im Oberbegriff des Anspruchs 1 angegebenen Merkmalen.

Mittels handelsüblicher Heimvideorecorder, die nach dem VHS-, Beta- oder V 2000-system arbeiten, ist eine Aufzeichnung von Signalen hoher Bandbreite (beispielsweise 10 MHz) nicht möglich, da die Aufzeichnungsbandbreite der Heimvideorecorder begrenzt ist, um den Preis für einen Heimvideorecorder akzeptabel zu gestalten.

Aus dem professionellen Bereich, im dem die Kostenfrage eine weniger bedeutenden Rolle spielt, sind bereits Videorecorder zur Aufzeichnung von Signalen mit hoher Bandbreite bekannt. Diese professionellen Videorecorder arbeiten üblicherweise mit einer sehr hohen Band- und Band-Kopf-Relativ-Geschwindigkeit, so daß sowohl das Band als auch die Köpfe einer hohen mechanischen Abnutzung ausgesetzt sind. Weiterhin ist die Aufzeichnungskapazität solcher Recorder wegen des hohen Bandverbrauchs beschränkt. Ein Abspielen handelsüblicher, bespielter Heimvideokassetten ist mit diesen professionellen Videorecordern nicht möglich.

Aus der von der SMPTE herausgegebenen Vortragssammlung "Tomorrow's Television", 1982, Seiten 237—247, ist ein von der Japan Broadcasting Corporation (NHK) entwickelter Videorecorder zur Aufzeichnung von sog. "High-Definition-Television"-Signalen bekannt, der eine Bandbreite von 30 MHz aufweist. Dieser Videorecorder arbeitet ebenso wie die oben genannten professionellen Videorecorder mit einer sehr hohen Bandlaufgeschwindigkeit (97,6 cm/s) und einer sehr hohen Schreib- bzw. Band-Kopf-Relativ-Geschwindigkeit (51,7 m/s), so daß auch dort Band und Köpfe mechanisch stark beansprucht sind. Zur Aufzeichnung der breitbandigen Signale werden — wie aus der dortigen Figur hervorgeht — die von einer HDTV-Kamera kommenden RGB-Signale in einer Matrixschaltung umgewandelt in eine Luminanzkomponente mit einer Bandbreite von 20 MHz und zwei Chrominanzkomponenten mit Bandbreiten von 7 bzw. 5,5 MHz. Die Luminanzkomponente wird zeitkomprimiert, frequenzmoduliert und auf einer ersten, vergleichsweise breiten Spur des Magnetbandes aufgezeichnet. Die Chrominanzkomponenten werden in einem Parallel-Serien-Wandler zusammengefaßt, zeitkomprimiert, frequenzmoduliert und auf einer zweiten, vergleichsweise schmalen Spur des Magnetbandes aufgezeichnet.

Aus der DE—A—31 14 273 ist ein Verfahren und eine Schaltungsanordnung zum Aufzeichnen und/oder Wiedergeben von digitalen Signalen bekannt, wobei zum Zwecke der Bandbreiten-reduktion der Datenstrom in einzelne Signalabschnitte aufgeteilt wird, welche einer Zeittransformation unterliegen. Diese zeittransformierten Signalabschnitte werden von am Umfang eines rotierenden Kopfträgers befestigten Magnetköpfen in unterschiedlichen Schrägspuren des Magnetbandes aufgezeichnet. Eine Anordnung der Videoköpfe und der von den Videoköpfen geschriebenen Spuren derart, daß mit dem Videorecorder auch bereits bespielte herkömmliche Heim-Videokassetten abgespielt werden können, ist jedoch nicht Gegenstand der DE—A—31 14 273.

Aus der DE—A—31 31 853 ist ein Verfahren und eine Schaltungsanordnung zum Aufzeichnen und/oder Wiedergeben von breitbandigen Farbvideosignalen bekannt, wobei die Signale bei der Aufzeichnung in eine Komponente mit größerem und eine Komponente mit kleinerem Bandbreitenbedarf aufgespalten sowie außerdem einer zeitlichen Unterteilung in Abschnitte bestimmter Länge unterworfen werden. Die Komponente mit größerem Bandbreitenbedarf (Luminanz) wird zeitexpandiert und die Komponente mit kleinerem Bandbreitenbedarf (Chrominanz) wird zeitkomprimiert. Die in der Zeitbasis geänderten Signalabschnitte werden in wenigstens zwei benachbarten Spuren eines Magnetbandes aufgezeichnet. Auch dieser Druckschrift ist nicht zu entnehmen, mittels welcher spezieller Maßnahmen in Bezug auf die Anordnung der Videoköpfe und der von den Köpfen geschriebenen Spuren ein Abspielen herkömmlicher Heimvideokassetten möglich ist.

Weiterhin ist aus der DE—A—31 09 006 ein Verfahren und eine Schaltungsanordnung zum Aufzeichnen und/oder Wiedergeben von Farbvideosignalen bekannt, wobei die Signale bei der Aufzeichnung einer Signalaufspaltung mit dem Ziel einer Bandbreitenreduktion unterworfen und in wenigstens zwei getrennten Kanälen aufgezeichnet werden. Bei der Wiedergabe werden die mehrkanalig aufgezeichneten Signale durch eine reziproke Zeitbasisänderung in die ursprüngliche Frequenzlage rückumgesetzt und zu einem dem ursprünglichen Signal entsprechenden Signal zusammengesetzt. Auch dieser Entgegen-haltung ist nicht zu entnehmen, mittels welcher spezieller Maßnahmen in Bezug auf die Anordnung der Videoköpfe und der von den Köpfen geschriebenen Spuren ein Abspielen herkömmlicher Heimvideokassetten möglich ist.

Der vorliegenden Erfindung liegt demgegenüber die Aufgabe zugrunde, einen Videorecorder zur Aufzeichnung und Wiedergabe von Signalen zu schaffen, deren Bandbreite größer ist als die begrenzte Bandbreite herkömmlicher genormter Farbvideosignale und mit dem eine Wiedergabe handelsüblicher, bespielter Heimvideokassetten möglich ist.

Diese Aufgabe wird durch die im Anspruch 1 angegebenen Merkmale gelöst. Vorteilhafte Weiterbildungen ergeben sich aus den Ansprüchen 2—5.

Der Vorteil des beanspruchten Videorecorders besteht vor allem darin, daß mit dem zur Aufzeichnung und Wiedergabe von Signalen hoher Bandbreite geeigneten Videorecorder aufgrund des bzw. der gewählten Spurbilder auch eine Wiedergabe bespielter herkömmlicher Heim-videokassetten möglich ist.

Weitere vorteilhafte Eigenschaften des Videorecorders nach der vorliegenden Erfindung ergeben sich aus bevorzugten Ausführungsbeispielen, welche im folgenden anhand der Figuren 1 bis 7 näher erläutert werden.

Es zeigen:

Fig. 1 ein Blockschaltbild zur aufzeichnungsseitigen Signalverarbeitung,

Fig. 2 ein Blockschaltbild zur wiedergabeseitigen Signalverarbeitung,

Fig. 3 ein Diagramm zur Erläuterung der zeitlichen Koordination von Einschreib- und Auslesevorgängen in den Speicher von Fig. 1,

Fig. 4 die Verteilung der aus dem Speicher 2 ausgelesenen Signale auf die Kanäle 1 und 2 von Fig. 1,

Fig. 5 ein Spurbild des Videorecorders nach der vorliegenden Erfindung,

Fig. 6 ein Spurbild eines herkömmlichen Heimvideorecorders,

Fig. 7 ein Beispiel für eine Anordnung die Videomagnetköpfe auf dem rotierenden Kopfträger zur Erzielung eines Spurbildes nach Fig. 5.

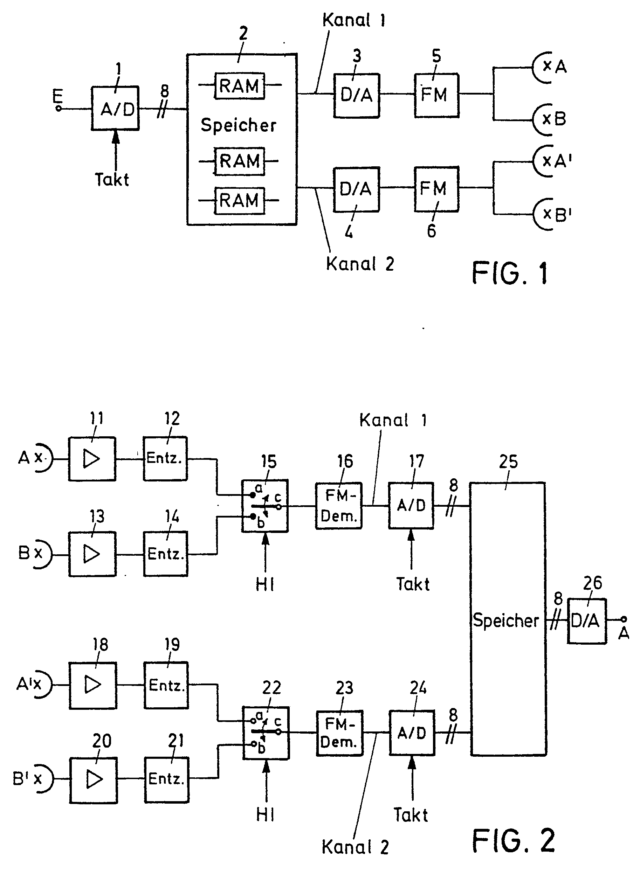

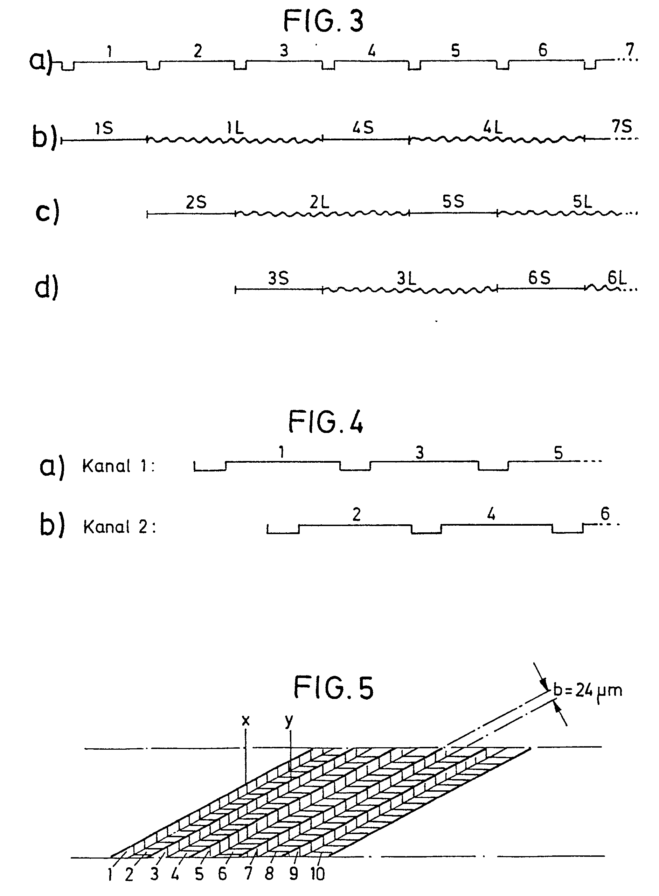

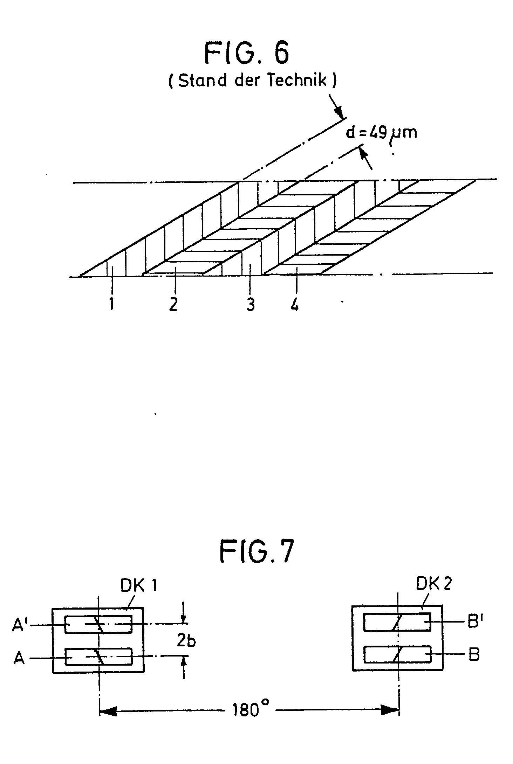

Die Figur 1 zeigt ein vereinfachtes Block-schaltbild zur aufzeichnungsseitigen Signal-verarbeitung. Dem Eingang E der Schaltung wird ein analoges Signal mit einer Bandbreite, die größer ist als die begrenzte Bandbreite herkömmlicher genormter Farbvideosignale (5 MHz), zugeführt, beispielsweise mit 10 MHz. Dieses Signal kann von einer hochauflösenden Kamera oder einer beliebigen anderen Signal- oder Datenquelle erzeugt werden. Dieses Signal wird in einem Analog-Digital-Wandler 1, dessen Abtastfrequenz beispielsweise 22 MHz ist, in ein Digitalsignal umgewandelt. Dieses gelangt an eine Speichereinheit 2, wird dort zeitexpandiert und beispielsweise auf 2 Kanäle aufgeteilt. Ein Beispiel für den Aufbau und die Arbeitsweise des Speichers 2 wird später im Zusammenhang mit den Figuren 3a und 3b näher erläutert. Das dem Kanal 1 zugeleitete zeitexpandierte Signal wird in einem D/A-Wandler 3 in ein zeitexpandiertes Analogsignal rückgewandelt, welches in einem Frequenzmodulator 5 frequenzmoduliert und den Videomagnetköpfen A und B zugeführt wird. Der Kopf A hat Bandkontakt und zeichnet das Signal auf. Der Kopf B hat keinen Bandkontakt und ist abgeschaltet (siehe auch Fig. 7). Das dem Kanal 2 zugeleitete zeitexpandierte Signal wird in einem D/A-Wandler 4 in ein Analogsignal rückgewandelt, welches in einem Frequenzmodulator 6 frequenzmoduliert und den Videomagnetköpfen A' und B' zur Aufzeichnung in Schrägspuren eines Magnetbandes zugeführt wird. Der Kopf A' hat Bandkontakt und zeichnet das Signal auf. Der Kopf B' hat keinen Kontakt und ist abgeschaltet (siehe auch Fig. 7). Beispiele für ein erhaltenes Spurbild und die Anordnung der Videomagnetköpfe A, A', B, B' auf dem rotierenden Kopfträger werden unten im Zusammenhang mit den Figuren 5 und 7 näher erläutert.

Die Figur 2 zeigt ein vereinfachtes Blockschaltbild zur wiedergabeseitigen Signalverarbeitung. Das vom Videomagnetkopf A wiedergegebene Signal wird in einem Verstärker 11 verstärkt und einem Entzerrer 12 zur Entzerrung des ungleichmäßigen Frequenzgangs des Kopfes A zugeführt. Vom Ausgang des Entzerrers 12 gelangt das entzerrte Signal an den Anschluß a eines Schalters 15. Das vom Videomagnetkopf B wiedergegebene Signal wird in einem Verstärker 13 verstärkt und einem Entzerrer 14 zur Entzerrung des ungleichmäßigen Frequenzganges des Kopfes B zugeführt. Vom Ausgang des Entzerrers 14 gelangt das entzerrte Signal an den Anschluß b des Schalters 15.

Der Anschluß c des Schalters 15 wird von den Kopfumschaltimpulsen HI des Videorecorders entweder mit dem Anschluß a oder mit dem Anschluß b verbunden, so daß entweder das vom Kopf A oder das vom Kopf B wiedergegebene Signal an einen Frequenzmodulator 16 weitergeleitet wird. Das demodulierte Signal wird in einem A/D-Wandler 17 in ein Digitalsignal umgewandelt, welches einem ersten Eingang einer Speichereinheit 25 zugeführt wird.

Das vom Videomagnetkopf A' wiedergebene Signal wird in einem Verstärker 18 verstärkt und einem Entzerrer 19 zur Entzerrung des ungleichmäßigen Frequenzganges des Kopfes A' zugeführt. Vom Ausgang des Entzerrers 19 gelangt das entzerrte Signal an den Anschluß a eines Schalters 22. Das vom Videomagnetkopf B' wieder-gebene Signal wird in einem Verstärker 20 verstärkt und einem Entzerrer 21 zur Entzerrung des ungleichmäßigen Frequenzgangs des Kopfes B' zugeführt. Vom Ausgang des Entzerrers 21 gelangt das entzerrte Signal an den Anschluß b des Schalters 22. Der Anschluß c des Schalters 22 wird von den Kopfumschaltimpulsen HI des Videorecorders entweder mit dem Anschluß a oder mit dem Anschluß b verbunden, so daß entweder das vom Kopf A' oder das vom Kopf B' wiedergegebene Signal an einen Frequenzmodulator 23 weitergeleitet wird. Das demodulierte Signal wird in einem A/D-Wandler 24 in ein Digitalsignal umgewandelt, welches dem zweiten Eingang der Speichereinheit 25 augeführt wird.

Im Speicher 25 werden die Signale zeitkomprimiert und von Zeitfehlern befreit. Außerdem werden die beiden parallelen Signale in ein serielles Digitalsignal rückgewandelt. Dieses wird in einem D/A-Wandler 26 analogisiert und steht am Ausgang A der Schaltung als breitbandiges Signal (10 MHz) zur Verfügung.

Die Figur 3 zeigt ein Diagramm zur Erläuterung der zeitlichen Koordination von Einschreib- und Auslesevorgängen in den Speicher 2 von Figur 1. Dieser Speicher besteht im vorliegenden Ausführungsbeispiel aus drei parallel angeordneten RAM's, von denen jedes eine Speicherkapazität von $2 k \times 8$ bit aufweist. Das am Eingang des Speichers 2 anliegende kontinuierliche, den einzelnen Zeilen des ersten Halbbildes des breitbandigen Signals zugehörige, digitalisierte Signal ist in a) gezeigt. Die Schreib- und Lesevorgänge des ersten RAM's zeigt b), wonach in das erste RAM die 1. Zeile des Eingangssignals eingeschrieben und unmittelbar darauf zeitexpandiert wieder ausgelesen wird, wie es durch die Abschnitte "1S" und "1L" in der Zeichnung angedeutet ist. Anschließend wird die 4. Zeile des Eingangssignals eingeschrieben und unmittelbar darauf zeitexpandiert wieder ausgelesen (siehe "4S" und "4L" in der Zeichnung). Die Schreib- und Lesevorgänge des zweiten RAM's zeigt c) und die Schreib- und Lesevorgänge des dritten RAM's sind aus d) ersichtlich.

Die Figur 4 zeigt die Verteilung der aus der Speichereinrichtung 2 bzw. aus den 3 parallelen RAM's ausgelesenen, zeitexpandierten Signale auf die Kanäle 1 und 2 von Figur 1. Dem Kanal 1 werden die zeitexpandierten Signale aller ungeradzahligen Zeilen des ersten Halbbildes des Signals hoher Bandbreite zugeführt, wie es aus a) ersichtlich ist. Dem Kanal 2 werden die zeitexpandierten Signale aller geradzahligen Zeilen des ersten Halbbildes des Signals hoher Bandbreite zugeführt, wie es aus b) ersichtlich ist. Folglich werden die beiden Kanäle 1 und 2 gleichzeitig mit Signalen versorgt, so daß die Köpfe A und A' bzw. B und B' jeweils gleichzeitig zwei Schrägspuren des Magnetbandes beschreiben, wie es im folgenden im Zusammenhang mit der Fig. 5 erläutert wird, während die anderen Magnetköpfe in diesem Zeitintervall nicht im Bandkontakt stehen.

Die Figur 5 zeigt ein Spurbild des Videorecorders nach der vorliegenden Erfindung. Daraus geht hervor, daß benachbarte Spuren unterschiedliche Azimutwinkel aufweisen. Die Schrägspur 1 des Magnetbandes enthält die vom Kopf A aufgezeichneten ungeradzahligen Zeilen des 1. Halbbildes des breitbandigen Signals und die Schrägspur 3 die vom Kopf A' aufgezeichneten geradzahligen Zielen des 1. Halbbildes des breitbandigen Signals. Die Schrägspur 2 des Magnetbandes enthält die vom Kopf B aufgezeichneten ungeradzahligen Zeilen des 2. Halbbildes des breitbandigen Signals und die Schrägspur 4 die vom Kopf B' aufgezeichneten geradzahligen Zeilen des 2. Halbbildes des breitbandigen Signals. Folglich ist die einem Halbbild des breitbandigen Signals entsprechende Information auf zwei örtlich voneinander entfernten Schrägspuren des Magnetbandes aufgezeichnet.

Die Schrägspuren 1—4 beinhalten demnach ein Vollbild des breitbandigen Eingangssignals. Die Schrägspuren 5—8 enthalten das zweite, die Schrägspuren 9—12 das dritte Vollbild des breitbandigen Eingangssignals, usw. Beim Aufzeichnungsvorgang werden die demselben Halbbild des breitbandigen Signals entsprechenden aufeinanderfolgenden ungeradzahligen oder geradzahligen Zeilen gleichzeitig aufgezeichnet, also beispielsweise die Spuren 1 und 3 oder 2 und 4, usw. (siehe auch Fig. 4). Die Breite b der Schrägspuren wird dabei erfindungsgemäß so gewählt, daß sie höchstens die halbe Spurbreite eines herkömmlichen Heimvideorecorders ist. Beispielsweise beträgt die gewählte Spurbreite 24 µm, während die Spurbreite der bekannten Grundig-VHS-Heimvideorecorder d = 49 µm beträgt, wie es die Figur 6 zeigt. Bei einer derartigen Wahl der Spurbreite wird — wie es aus einem Vergleich der Figuren 5 und 6 ohne weiteres ersichtlich ist — ein Abspielen herkömmlicher bespielter Heimvideokassetten mit Hilfe des erfindungsgemäßen Videorecorders möglich, da die einander entsprechenden Spurkanten der Schrägspuren gleichen Azimutwinkels (beispielsweise Spurkanten x und y in Fig. 5) senkrecht zur Spurrichtung um genau die Breite d einer Shrägspur eines herkömmlichen Heimvideorecorders beabstandet sind. Folglich kann beispielsweise die Spur 1 des bekannten Spurbildes (Fig. 6), die die einem Halbbild des aufgezeichneten Signals entsprechénde Information enthält, vom Kopf A des Videorecorders nach der vorliegenden Erfindung, die Spur 2 des bekannten Spurbildes vom Kopf B, usw., gelesen werden. Diese Informationen können auf einem herkömmlichen Fernsehempfänger dargestellt werden.

Die Figur 7 zeigt ein Beispiel für eine Anordnung der Videomagnetköpfe auf dem rotierenden Kopfträger zur Erzielung eines Spurbildes nach Figur 5. Dabei ist ein erster Doppel-Videomagnetkopf DK 1 an einer Stelle des Außenumfangs einer rotierende Kopftrommel befestigt, während ein zweiter Doppel-Videomagnetkopf DK 2 um 180° versetzt auf der gegenüberliegenden Seite der Kopftrommel angebracht ist. Der Doppelkopf DK 1 weist 2 Köpfe A und A' gleichen Azimutwinkels auf, die um die Breite zweier Schrägspuren (2b) des erfindungsgemäßen bzw. um die Breite einer Schrägspur (d) eines herkömmlichen Videorecorders gegeneinander höhenversetzt sind (siehe Fig. 7). Der Doppelkopf DK 2 weist ebenfalls 2 Köpfe B und B' gleichen, aber vom Azimutwinkel der Köpfe A, A' unterschiedlichen Azimutwinkels auf. Auch die Köpfe B und B' sind um die Breite zweier Schrägspuren (2b) des erfindungsgemäßen bzw. um die Breite einer Schrägspur (d) eines herkömmlichen Videorecorders gegeneinander höhenversetzt (siehe Fig. 7).

Die Köpfe A und A' bzw. B und B' können selbstverständlich auch von zwei übereinander bzw. am Umfang der Kopftrommel unmittelbar nebeneinander angeordneten, höhenversetzten Einzelköpfen gebildet werden, deren Herstellung einfacher ist als die Herstellung eines Doppelkopfes.

Durch die im Zusammenhang mit der Figur 5 beschriebenen Aufteilung der einem Halbbild des breitbandigen Eingangssignals entsprechenden Information auf räumlich voneinander getrennte Schrägspuren ist auch in einfacher Weise die Kompensation von Dropouts möglich, welche sich über höchstens zwei Spuren des in Figure 5 gezeigten Spurbildes erstrecken. Die von einem Dropout zerstörte Information kann durch Information aus einer oder aus mehreren, auf dem Bildschirm benachbarten Zeilen ersetzt werden, welche an einer vom Dropout nicht erfaßten Stelle des Magnetbandes aufgezeichnet ist. Auch ist bei einer totalen Verschmutzung bzw. einem Totalausfall eines Kopfes, was bei einem herkömmlichen Videorecorder zu einer unzumutbaren Bildstörung führen würde, eine zufriedenstellende Wiedergabe möglich.

Die Aufteilung des Signals auf mehr als zwei Kanäle ist zur weiteren Erhöhung der Signalbandbreite möglich. Ferner versteht es sich von selbst, daß die aufzuzeichnenden bzw. wiedergegebenen Signale mit Synchronisiersignalen versehen sein müssen. Dies ist der Fachwelt allgemein bekannt und nicht Gegenstand der vorliegenden Erfindung, so daß diesbezüglich von Erläuterungen abgesehen werden kann.

**Patentansprüche**

1. Videorecorder zur Aufzeichnung und Wiedergabe von Videosignalen, deren Bandbreite größer ist als die begrenzte Bandbreite herkömmlicher genormter Farbvideosignale, bei dem auf einem rotierenden Kopfträger 2 n Videomagnetköpfe befestigt sind, bei dem das Eingangssignal hoher Bandbreite auf n Kanäle aufgeteilt wird, bei dem das Signal jedes der n Kanäle zeitexpandiert, einer Frequenzmodulation unterworfen und das frequenzmodulierte Signal den Videomagnetköpfen zugeführt wird, und bei dem das wiedergegebene Signal demoduliert zeitkomprimiert und zu einem kontinuierlichen Ausgangssignal zusammengefaßt wird, dadurch gekennzeichnet, daß

das einem Halbbild des breitbandigen Signals entsprechende Signal von n ersten Videomagnetköpfen gleichen Azimutwinkels gleichzeitig für n aufeinanderfolgende Signalabschnitte des genannten einen Halbbildes auf n voneinander beabstandete erste Schrägspuren (1, 3, . . .) und

das dem anderen Halbbild des breitbandigen Signals entsprechende Signal von den n weiteren Videomagnetköpfen ebenfalls gleichen Azimutwinkels, der sich vom Azimutwinkel der n ersten Videomagneteköpfe unterscheidet, ebenfalls gleichzeitig für n aufeinanderfolgende Signalabschnitte des genannten anderen Halbbildes, aber in den aufzeichnungsfreien Zeitabschnitten der ersten Videomagnetköpfe, auf n weitere voneinander beabstandete, mit den ersten Schrägspuren (1, 3, . . .) räumlich ineinander verschachtelte Schrägspuren (2, 4, . . .) geschrieben wird, so daß benachbarte Schrägspuren (1 und 2, 3 und 4, . . .) unterschiedliche Azimutwinkel besitzen, wobei

die Spurbreite jeder Schrägspur (1, 2, 3, 4, . . .) kleiner oder höchstens gleich dem n-ten Teil der Breite einer Spur eines herkömmlichen Heimvideorecorders ist und

die einander entsprechenden Spurkanten der Schrägspuren gleichen Azimutwinkels senkrecht zur Spurrichtung um den n/2-ten Teil der Breite einer spur eines herkömmlichen Heimvideorecorders voneinander beabstandet sind.

2. Videorecorder nach Anspruch 1, dadurch gekennzeichnet, daß jedes Halbbild von einem n-Kopfspalte gleichen Azimutwinkels aufweisenden Mehrfach-Videomagnetkopf aufgezeichnet bzw. gelesen wird.

3. Videorecorder nach einem oder mehreren der vorhergehenden Ansprüche, dadurch gekennzeichnet, daß die Zeitexpansion bzw. -kompression in einer digitalen Speichereinrichtung erfolgt.

4. Videorecorder nach Anspruch 3, dadurch gekennzeichnet, daß die digitale Speichereinrichtung aus einzelnen RAM's besteht, die nach dem Wechselpufferprinzip arbeiten, so daß der zur Verfügung stehende Zeitrahmen einerseits voll ausgenutzt wird, sich andererseits aber Einschreib- und Auslesevorgänge eines jeden RAM's nicht überschneiden.

5. Videorecorder nach einem oder mehreren der vorhergehenden Ansprüche, dadurch gekennzeichnet, daß er zum Abspielen handelsüblicher bespielter Videokassetten verwendet wird.

**Revendications**

1. Enregistreur vidéo pour l'enregistrement et la reproduction de signaux vidéo, dont la largeur de bande est supérieure à la largeur de bande limitée de signaux vidéo couleurs usuels normalisés, et dans lequel, sur un porte-têtes rotatif, sont fixées 2n têtes magnétiques vidéo, le signal d'entrée possédant une largeur de bande élevée est réparti en n canaux, le signal de chacun des n canaux est dilaté dans le temps et est soumis à une modulation de fréquence et le signal modulé en fréquence est envoyé aux têtes magnétiques vidéo, et dans lequel le signal reproduit est démodulé, comprimé dans le temps et réuni pour former un signal de sortie continu, caractérisé en ce que

le signal correspondante à une trame du signal à large bande est enregistré simultanément, par n premières têtes magnétiques vidéo présentant le même angle azimutal, pour n sections successives de signaux de ladite trame, sur n premières pistes obliques (1, 3, . . .) distantes les unes des autres, et

le signal correspondant à l'autre trame du signal à large bande est également enregistré simultanément, par les n autres têtes magnétiques vidéo présentant également le même angle azimutal, qui diffère de l'angle azimutal des n premières têtes magnétiques vidéo, pour n sections successives de signaux de ladite autre trame, mais dans des intervalles de temps, n'impliquant aucun enregistrement, des premières têtes magnétiques vidéo, sur n autres pistes obliques (2, 4, . . .) distantes les unes des autres et imbriquées spatialement avec les premières pistes obliques (1, 3, . . .), de sorte que des pistes obliques voisines (1 et 2, 3 et 4, . . .) possèdent des angles azimutaux différents,

la largeur de chaque piste oblique (1, 2, 3, 4, . . .) est inférieure ou tout au plus égale à la n-ème partie de la largeur d'une piste d'un magnétoscope domestique usuel, et

les bords, qui se correspondent réciproquement, des pistes obliques présentant le même angle azimutal sont séparés les uns des autres, perpendiculairement à la direction des pistes, d'une distance égale à la n/2-ème partie de la largeur d'une piste d'un magnétoscope domestique usuel.

2. Enregistreur vidéo selon la revendication 1, caractérisé en ce que chaque trame est enregistrée ou lue par une tête magnétique vidéo multiple comportant n fentes de têtes présentant le même angle azimutal.

3. Enregistreur vidéo selon une ou plusieurs des revendications précédentes, caractérise en ce que la dilatation ou la compression du temps s'effectue dans un dispositif de mémorisation numérique.

4. Enregistreur vidéo selon la revendication 3, caractérisé en ce que le dispositif d'enregistrement numérique est constitué par des mémoires RAM individuelles, qui travaillent selon le principe de la mémorisation temporaire alternative, de sorte que d'une part le canevas temporel disponible est utilisé complètement, mais que d'autre part des processus d'enregistrement et de lecture de chaque mémoire RAM en se chevauchent pas.

5. Enregistreur vidéo selon une ou plusieurs des revendications précédentes, caractérisé en ce qu'il est utilisé pour la lecture de cassettes vidéo préenregistrées, usuelles dans le commerce.

**Claims**

1. Video recorder for the recording and reproduction of video signals of which the band width is greater than the limited band width of conventional standardised colour video signals, in which 2 n video magnetic heads are fastened on a rotating head support, in which the input signal of high band width is divided over n channels, in which the signal of each of the n channels is time-expanded, subjected to a frequency modulation and the frequency modulated signal is fed to the video magnetic heads, and in which the reproduced signal is demodulated, time-compressed and combined into a continuous output signal, characterized in that

the signal corresponding to one field of the broadband signal is recorded by n first video magnetic heads of the same azimuth angle simultaneously for n successive signal sections of the said one field onto n mutually spaced apart first helical tracks (1, 3, . . .) and

the signal corresponding to the other field of the broadband signal is recorded by the n further video magnetic heads likewise of the same azimuth angle, which differs from the azimuth angle of the n first video magnetic head, likewise simultaneously for n successive signal sections of the said other field, but in the time intervals of the first video magnetic heads without any recording, onto n further mutually spaced-apart helical tracks (2, 4, . . .) which are spatially interleaved with the first helical tracks (1, 3, . . .), so that neighbouring helical tracks (1 and 2, 3 and 4, . . .) have different azimuth angles, where

the track width of each helical track (1, 2, 3, 4, . . .) is less than or at most equal to the nth part of the width of a track of a conventional home video recorder and

the mutually corresponding track edges of the helical tracks of the same azimuth angle are spaced apart from one another perpendicularly to the track direction of the n/2th part of the width of a track of a conventional home video recorder.

2. Video recorder according to Claim 1, characterized in that each field is recorded or read by a multiple video magnetic head having n head gaps of the same azimuth angle.

3. Video recorder according to one or more of the preceding claims, characterized in that the time expansion or compression takes place in a digital memory device.

4. Video recorder according to Claim 3, characterized in that the digital memory device consists of individual RAMs which operate on the alternating buffer principle, so that on the one hand the time frame available is fully utilized, but on the other hand writing and reading operations of each RAM do not overlap.

5. Video recorder according to one or more of the preceding claims, characterized in that it is used for playing back commercially available pre-recorded video cassettes.

Kanal 1

FIG. 1

Kanal 2

Kanal 1

FIG. 2

Kanal 2

1

# FIG. 3

a)

b)

c)

d)

# FIG. 4

a) Kanal 1:

b) Kanal 2:

# FIG. 5

b=24 μm

# FIG. 6
### ( Stand der Technik )

d = 49 μm

1    2    3    4

# FIG.7

DK 1

A'

A

2b

DK 2

B'

B

180°